(19) **Europäisches Patentamt European Patent Office Office européen des brevets**

(11) **EP 3 245 834 B1**

(12) **EUROPEAN PATENT SPECIFICATION**

(45) Date of publication and mention
of the grant of the patent:
**05.06.2019 Bulletin 2019/23**

(51) Int Cl.:
**H04W 74/08** *(2009.01)*  **H04W 28/18** *(2009.01)*

(21) Application number: **15700734.5**

(22) Date of filing: **21.01.2015**

(86) International application number:
**PCT/EP2015/051054**

(87) International publication number:
**WO 2016/116143 (28.07.2016 Gazette 2016/30)**

(54) **EFFICIENT MULTI-CLIENT ACCESS USING DYNAMIC CONTENTION WINDOW**

EFFIZIENTER MEHRFACHKLIENTENZUGRIFF MIT DYNAMISCHEM WETTBEWERBSFENSTER

ACCÈS EFFICACE DE MULTI-CLIENTS UTILISANT UNE FENÊTRE DE CONTENTION DYNAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.11.2017 Bulletin 2017/47**

(73) Proprietor: **Huawei Technologies Co., Ltd. Longgang District Shenzhen, Guangdong 518129 (CN)**

(72) Inventors:
• **WEITZMAN, Avi**
  **80992 Munich (DE)**
• **EZRI, Doron**
  **80992 Munich (DE)**
• **SHILO, Shimi**
  **80992 Munich (DE)**
• **KLAUSNER, Ohad**
  **80992 Munich (DE)**
• **SUN, Fuqing**
  **80992 Munich (DE)**
• **FAN, Ronghu**
  **80992 Munich (DE)**
• **RUAN, Wei**
  **80992 Munich (DE)**

(74) Representative: **Kreuz, Georg Maria et al Huawei Technologies Duesseldorf GmbH Riesstraße 25 80992 München (DE)**

(56) References cited:
**WO-A1-2006/097899      US-A1- 2011 182 171
US-B1- 7 826 838**

**Description**

BACKGROUND

The present invention, in some embodiments thereof, relates to wireless local area networks (WLANs) and, more specifically, but not exclusively, to contention resolution between data frame collisions on a WLAN.

In some wireless local area networks, wireless access points (APs) provide network access to client WLAN devices, also referred to as client terminals, by sending and receiving data frames at a predefined frequency range, such as a frequency channel. For example, an AP apparatus is an apparatus that allows WLAN devices to connect to a wired Ethernet network for internet access, and an AP apparatus may be a wireless router mobile device, a wireless access point, a wireless network switch, a mobile hotspot device, a cellular router, and the like. A WLAN device may be a client terminal that is adapted to connect to a WLAN, for example a mobile device, a laptop, a tablet, a computer, a WLAN-connected appliance, and the like. A number of WLAN devices may simultaneously communicate with an AP on the same channel using standard protocols. The AP and WLAN devices associated with the AP define basic service sets (BSSs), and when several APs and the WLAN devices use the same frequency channel, each AP and associated WLAN devices are defined as overlapping basic service sets (OBSSs). The Institute of Electrical and Electronic Engineering (IEEE) standard 802.11 defines the protocols that may allow multiple WLAN device connections to an AP using the same medium according to a distributed coordination function (DCF). The DCF uses a carrier sense multiple access with collision avoidance (CSMA/CA) method with a backoff algorithm to avoid collisions between the data frames of the multiple WLAN devices.

In recent years, data communication types of different urgency and/or priority, such as voice over internet protocol (VOIP), streaming video, and the like, have prompted the IEEE to enhance the 802.11 standard to allow coordination among the WLAN devices when sharing the frequency channel. The IEEE 802.11e standard defines access categories for data frames and data frames with higher priority are given more access to the medium, such as VOIP data frames, streaming video data frames, and the like. The IEEE 802.11e standard also defines quality of service (QoS) parameters for measuring and tuning the performance of the access category data frames, such as service response time, loss, signal-to-noise ratio, crosstalk, echo, interrupts, frequency response, timing parameters, and the like. When a contention between WLAN devices occurs, such as a collision of simultaneous transmission of data frames by two or more WLAN devices, the DCF backoff algorithm mitigates the contention. Each WLAN device uses the backoff algorithm to determine a backoff counter value that is counted down when the medium is idle, before the WLAN device attempts to retransmit the data frame again. The retransmission time delay is based on the initial backoff counter value, the slot time, and the number of attempts to retransmit.

The CSMA/CA method to use the backoff counter value, implemented in the IEEE 802.11 standard, is as follows. The initial backoff counter is assigned a value by a selecting random number of idle time slots to wait before attempting to retransmit the data frame. The WLAN device waiting to retransmit the data frame listens to the frequency channel until there are no detected transmissions from other WLAN devices, such as an idle medium state. The WLAN device waits an additional idle predetermined time period termed the distributed inter frame Space (DIFS) time before attempting to retransmit the data frame. When there are transmissions by other WLAN devices during the backoff time, such as the time before the backoff counter reaches zero, the WLAN device freezes the backoff counter. The WLAN device resumes the countdown of the backoff counter after all other WLAN devices have finished transmission and the medium is in idle state, decreasing the backoff counter by one for every idle time slot. The WLAN device starts its retransmission when the backoff counter reaches zero. The backoff algorithm sets upper and lower limits of the initial values assigned to the backoff counter, therein defining the contention window (CW). The lower limit value of the contention window ($CW_{min}$) and upper limit value of the contention window ($CW_{max}$) are set according to the access category and amount of data frame traffic in that access category. For example, a wider window is needed for access categories with more traffic. For example, a higher priority access category may have lower values of $CW_{min}$ and $CW_{max}$ to allow faster retransmission. The values of $CW_{min}$ and $CW_{max}$ define the contention window during which retransmissions are allowed after a collision between data frames from multiple WLAN devices.

WO2006097899 (A1) discloses a wireless network that includes a plurality of wireless stations (QSTAs) and an access point (QAP). The QAP, or one or more of the QSTAs, or both, measure delay data, or queue data, or both, per one or more traffic type. A network parameter of the QSTA or QAP can be adjusted based on the measured delay data, queue length, or both.

SUMMARY

It is an object of the present invention to improve wireless network data throughput rate and quality of service performance.

The object is achieved by the subject matter of the independent claims. The dependant claims protect further implementation forms.

According to some embodiments of the invention there is provided an apparatus adapted to update a contention window (CW). The apparatus comprises a wireless local area network (WLAN) transceiver adapted to receive, during a monitoring period, two or more transmissions from two or more WLAN devices. The apparatus comprises a processor adapted to perform the following actions. The processor is adapted to identify transmission timing of two or more data frames encoded in some of the transmissions during the monitoring period. The processor is adapted to identify interlude timing of two or more transmission interludes between the data frames. The processor is adapted to calculate a statistical measure of length of the transmission interludes. The processor is adapted to update a CW value of the WLAN devices according to the statistical measure.

Optionally, the statistical measure is an average.

Optionally, the processor is adapted to extract quality of service (QoS) parameters of each one of the WLAN devices from the transmissions, classify the transmissions as originated from a controlled access point or an uncontrolled access point according to the QoS parameters, and identify the at least some transmissions according to the classification.

Optionally, the processor is adapted to estimate a number of active WLAN devices among the WLAN devices by calculating a ratio between a product of the CW value and the interlude timing quantized in a slot time and the statistic measure.

Optionally, the processor is adapted to calculate another statistical measure estimating a number of inactive WLAN devices among the WLAN devices according to the statistical measure, and perform the update according to the other statistical measure.

Optionally, the processor is adapted to calculate Short Interframe Space (SIFS) delays in the transmissions and to identify interlude timing while removing the SIFS delays from the transmission interludes.

Optionally, the update optimizes downlink and uplink parameters of the apparatus.

Optionally, the processor is further adapted to use the updated CW value when transmitting or receiving data using the WLAN transceiver, and repeat the actions of identify transmission timing, identify interlude timing of a plurality, calculate and update for further updating the updated CW value.

Optionally, the transmission timing and the interlude timing is measured in slot time.

Optionally, the processor is adapted to perform the repeat when the statistical measure is one or more of above a minimum delay threshold, below a maximum delay threshold.

Optionally, the processor is adapted to perform the update by incrementing, duplicating, and raising to power CW value.

According to some embodiments of the present invention there is provided a system comprising two or more apparatuses, each defined as recited herein, wherein the system comprises a central processor adapted to receive two or more statistical measures each from another of the apparatuses and to calculate accordingly one or more Wireless Multimedia Extension (WME) parameter for one or more of downlink and uplink management.

Optionally, the processor is adapted to extract quality of service (QoS) parameters of each one of the WLAN devices from the transmissions, wherein the QoS parameters are selected from a group consisting of Arbitration interframe spacing (AIFS), Exponent Minimum Contention Window (ECWmin), and Exponent Maximum Contention Window (ECWmax).

Optionally, the transmission interludes are identified by analyzing whether transmission reception energy level of the transmissions is above a clear channel assessment (CCA) threshold.

According to some embodiments of the present invention there is provided a method of updating a contention window (CW). The method comprises an action of receiving, during a monitoring period, two or more transmissions from two or more WLAN devices. The method comprises an action of identifying transmission timing of two or more data frames encoded in at least some of the transmissions during the monitoring period. The method comprises an action of identifying interlude timing of two or more transmission interludes between the data frames. The method comprises an action of calculating a statistical measure of length of the transmission interludes. The method comprises an action of updating a CW value of the WLAN devices according to the statistical measure.

According to some embodiments of the present invention there is provided a computer program comprising a readable storage medium storing program code thereon for updating a contention window (CW). The program code comprises instructions for identifying transmission timing of two or more data frames encoded in at least some of two or more transmissions received from two or more WLAN devices during a monitoring period. The program code comprises instructions for identifying interlude timing of two or more transmission interludes between the data frames. The program code comprises instructions for calculating a statistical measure of length of the transmission interludes. The program code comprises instructions for updating a CW value of the WLAN devices according to the statistical measure.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention may involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a processor optionally using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1A is an AP apparatus for calculating CW values of a WLAN, according to some embodiments of the invention;
FIG. 1B is a system for calculating wireless contention parameters of a WLAN, according to some embodiments of the invention;
FIG. 2 is a flowchart of a method for calculating CW values of a WLAN, according to some embodiments of the invention;
FIG. 3 is a flowchart of a method for calculating a wireless contention parameters of multiple access points in a WLAN, according to some embodiments of the invention;
FIG. 4A is a flowchart of a method for calculating a minimum CW value of a WLAN, according to some embodiments of the invention;
FIG. 4B is a flowchart of a method for calculating a maximum CW value of a WLAN, according to some embodiments of the invention;
FIG. 5 is a schematic illustration of a WLAN timing diagram showing interlude timing, according to some embodiments of the invention;
FIG. 6A is a graph of throughput versus CW minimum values for 20 client WLAN devices, according to some embodiments of the invention;
FIG. 6B is a graph of throughput versus CW minimum values for five client WLAN devices, according to some embodiments of the invention;
FIG. 6C is a graph of collision probability and data rate versus CW minimum values for six client WLAN devices, according to some embodiments of the invention;
FIG. 6D is a data table of the CW minimum values according to the number of client WLAN devices, according to some embodiments of the invention; and
FIG. 6E is a graph of throughput efficiency versus the number of active WLAN devices at different CW minimum values, according to some embodiments of the invention.

DETAILED DESCRIPTION

The present invention, in some embodiments thereof, relates to wireless local area networks (WLANs) and, more specifically, but not exclusively, to contention resolution between data frame collisions on a WLAN.

The throughput of a wireless local area networks (WLAN) controlled by a distributed coordination function (DCF) depends on the data frame length, physical layer data rate and collision rate. Collision rate is determined by the number of devices using the wireless media and CW values used by the backoff algorithm. For example, the Institute of Electrical and Electronic Engineering (IEEE) 802.11 standard defines a binary exponential backoff algorithm with limiting values, such as a minimal CW ($CW_{min}$) and a maximal CW ($CW_{max}$) values, for the backoff counter. Selecting a value of $CW_{min}$

and $CW_{max}$ in the backoff algorithm, such as in a CSMA/CA process, determines the collision probability and protocol overhead size. This is especially important when a large number of client WLAN devices, such as greater than 50 client WLAN devices, are connected to an AP apparatus. When a $CW_{min}$ value is selected incorrectly, the data throughput rate is reduced because the backoff process increases the data frame retransmission delay, especially in 802.11n networks, 802.11ac networks, and the like. For example, selecting a lower value of $CW_{min}$ than the optimal $CW_{min}$ causes a high collision rate and reduces the data throughput rate. For example, selecting a higher value of $CW_{min}$ than the optimal $CW_{min}$ increases interlude time between data frames and reduces the data throughput rate. When a $CW_{max}$ values is selected incorrectly the data throughput rate is reduced. For example, selecting a $CW_{max}$ value higher than the optimal value increases the backoff delay time and increases delays due to sporadic collisions. For example, the high priority data frame transfer delay is increased on the average for WLAN devices in an overlapping basic service set (OBSS) systems with a $CW_{max}$ value higher than the optimal value.

As used herein, the terms $CW_{min}$ and $CW_{max}$ mean the minimum of maximum values of a contention window in a WLAN backoff algorithm, such as an exponential backoff algorithm. Alternative embodiments of the invention may use the terms $ECW_{min}$ and $ECW_{max}$, which refer to the exponential use of the CW values in the backoff algorithm, such as exponent minimum and maximum contention window values. For example, the number 2 raised to the power of the $ECW_{min}$ value is an exponential use of a CW value. Some embodiments of the invention may use the terms $aCW_{min}$ and $aCW_{max}$ that may refer to the minimum and maximum values of the backoff counter respectively. The backoff counter values may be expressed in number of time slots or may be expressed as a time value, such as in milliseconds.

Selecting optimal CW values depends on the number of WLAN devices in contention, the number of overlapping APs, the number of active client WLAN devices on the current frequency channel, the number of active WLAN devices in each access category (AC), data frame transmit time, such as a media access control protocol data unit time, request to send (RTS) time, clear to send (CTS) time, and the like. It is very difficult to estimate the number of active client WLAN devices for each AP apparatus. The ratio of associated and active client WLAN devices changes according to running applications on each WLAN device, client WLAN device types, and the like.

According to embodiments of the invention, there is provided an apparatus and a method for analyzing interlude times in data frame radio transmissions on a frequency channel of a wireless local area network (WLAN), and calculating wireless transmission parameters for increasing the data throughput rate of the WLAN. A radio transceiver receives the data frame transmissions of all WLAN devices, and a processor identifies the data frame timings. From the identified data frame timings, the interlude timings between data frames are identified by the processor and the processor then calculates a statistical measure of the interlude timings for each WLAN device. Based on the statistical measures, which may be an average, a median, a percentile, or the like, the CW values, such as $CW_{min}$, $CW_{max}$, arbitration inter-frame space parameters (AIFS), and/or the like, are updated by the processor and sent to the WLAN devices during a beacon frame transmission. The updated CW values achieve higher throughput data rates and better quality of service parameters relative to conventional CW values computed by the methods in the IEEE 802.11 standard.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

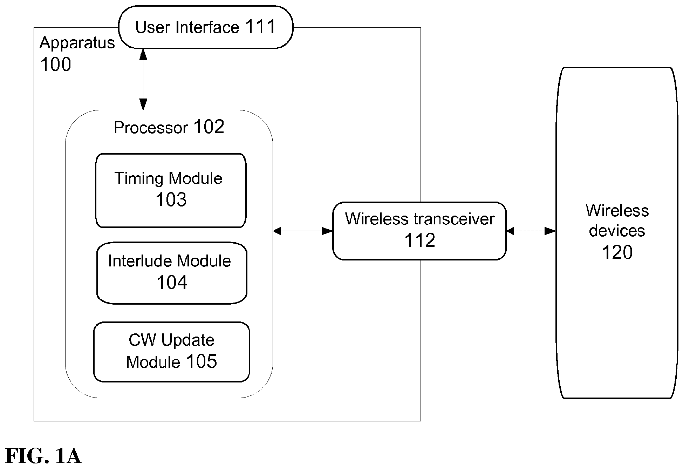

Following is a description of an AP apparatus according to some embodiments of the invention. Reference is now made to FIG. 1A, which is an AP apparatus for calculating CW values of a WLAN, according to some embodiments of the invention. The AP apparatus 100 comprises a wireless transceiver 112 to receive data transmissions from two or more WLAN devices 120, such as client terminals. The AP apparatus 100 comprises a processor 102 that may comprise software modules, such as a timing module 103, an interlude module 104, and a CW update module 105. The timing module 103 is adapted to receive wireless transmissions during a monitoring period from the WLAN devices 120, and identify transmission timing of data frame transmissions during the monitoring period. The interlude module 104 receives the transmission timings and identifies interlude timing of transmission interludes between the data frames. The CW update module 105 receives the interlude timings and calculates statistical measures of the interlude timings to update the number of active WLAN devices associated with the each AP apparatus 100 of the BSS or OBSS systems, update minimal and/or maximal values for a CW backoff counter, update values for AIFS parameters, and the like. A user interface 111 connected to the processor 102 of the AP apparatus 100 allows a user to monitor and control the activity of the AP apparatus 100 and/or software modules 103, 104 and 105. For example, the user interface 111 is a connected keyboard/mouse/display, a web page interface, a status light interface, a slider switch array, and the like.

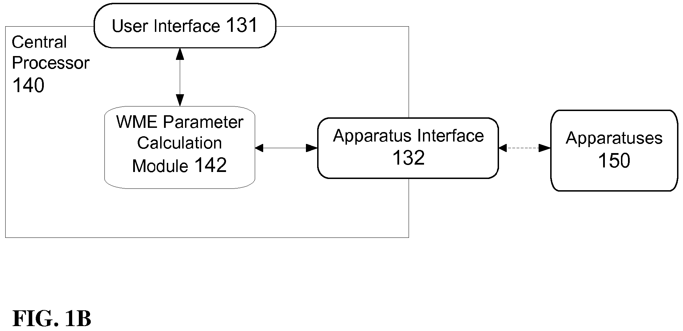

Following is a description of a system comprising AP apparatuses according to some embodiments of the invention. Reference is now made to FIG. 1B, which is a system for calculating wireless contention parameters of a WLAN, according to some embodiments of the invention. The system comprises a central processor 140 including a wireless multimedia extension (WME) parameter calculation module 142 to receive multiple statistical measures, each from one of multiple AP apparatuses 150 using an apparatus interface 132, such as a WLAN interface, an Ethernet interface, and the like. The AP apparatuses 150 can be classified into Controlled AP Apparatuses (151) and Uncontrolled AP apparatuses (152). The WME parameter calculation module 142 then calculates one or more WME parameter values, such as CW values, QoS parameters, arbitration interframe spacing values, and the like, according to the statistical measures for configuring the uplink and/or downlink management of the AP apparatuses 150. A user interface 131 connected to the processor 140 allows a user to monitor and control the activity of the WME parameter calculation module 142.

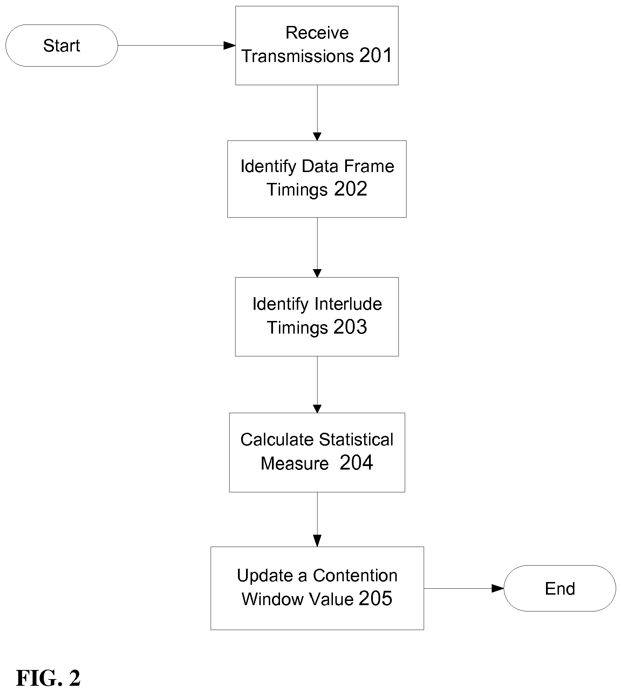

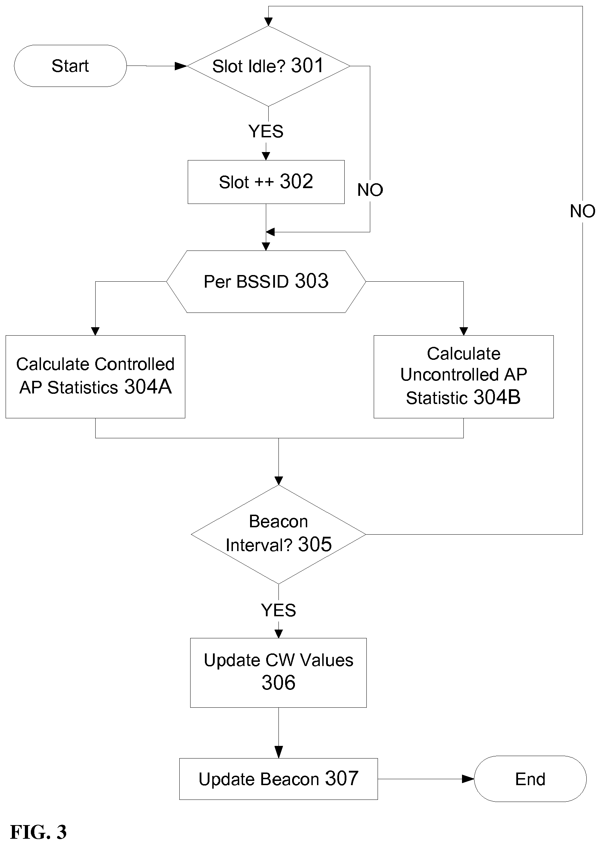

Reference is now made to FIG. 2, which is a flowchart of a method for calculating CW values of a WLAN, according to some embodiments of the invention. The method comprises an action of a processor 102 receiving 201, using a wireless transceiver 112, data frame transmissions from WLAN devices 120 after the AP apparatus 100 has sent a beacon frame. The timing module 103 receives the data frame transmissions and identifies 202 transmission timing of data frame packets associated with the WLAN devices 120 of a BSS. Subsequent to the data frame timing identification, the interlude module 104 identifies 203 the interlude timings between the data frames according to the following. Reference is now made to FIG. 3, which is a flowchart of a method for calculating wireless contention parameters of multiple access points in a WLAN, according to some embodiments of the invention. When the interlude module 104 identifies 203 the interlude timings between the data frames as being an idle slot 301 of the transmission, the slot counter is incremented 302 and the interlude module 104 identifies the basic service set identification (BSSID) for each data frame. For example, a frequency channel is assessed to be idle, such as when no WLAN devices are transmitting data, according to a clear channel assessment (CCA) method described in IEEE 802.11-2007 standards as part of the Physical Medium Dependant (PMD) and Physical Layer Convergence Protocol (PLCP) layer. When the slot is not idle, the counter is not incremented.

The CW update module 105 receives the interlude timings and calculates 204 statistical measures from the interlude timings. For each BSSID 303 of a controlled AP apparatus, such as OBSS AP apparatuses that have shared their statistical measures and/or CW values previously, a new statistical measure is calculated 304A for all idle slots of that BSSID by the CW update module 105. For example, the statistical measure of the idle slot timing is an average, a median, a weighted average, a percentile, a mode, and the like, calculated by the CW update module 105. For uncontrolled AP apparatuses, the statistical measure is calculated 304B separately by the CW update module 105 for all the uncontrolled AP apparatuses combined. For example, when there are five AP apparatuses that are not controlled by the AP apparatus 100, the five uncontrolled AP apparatuses 152 are grouped together by the CW update module 105 and one statistical measure may represent all idle slot times for these five AP apparatuses.

The identification 203 of interlude timings and calculation 304A and 304B of statistical measures may be repeated by the CW update module 105 until a beacon interval is scheduled 305. When a beacon interval is reached 305, the CW update module 105 updates 306 the CW values based on the statistical measures. For example, to set the CW values the number of WLAN devices in each BSSID is calculated by the CW update module 105 according to the equation:

$$N_{STA} = \left( \frac{CW_{min} \cdot Slot_{time}}{2 \cdot (Delay - AIFS)} \right) \qquad \text{EQN. 1}$$

where $CW_{min}$ denotes the previous value of the $CW_{min}$ of this BSSID, Slottime denotes the slot time for this BSSID, Delay denotes the statistical measure for the interlude delay time calculated by the interlude module 104 for this BSSID, and AIFS denotes the previously used arbitration interframe spacing for this BSSID. The number of WLAN devices in each BSSID can then be used by the CW update module 105 to update 306 new CW values, such as $CW_{min}$ and $CW_{max}$, according to the following methods and equations.

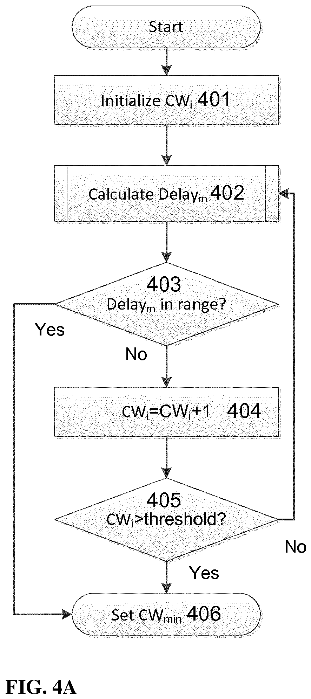

Reference is now made to FIG. 4A, which is a flowchart of a method for calculating a minimum CW value of a WLAN, according to some embodiments of the invention. A temporary variable, denoted by CWi, is initialized 401 to a low value by the CW update module 105, such as 8 for example, and the CW update module 105 then calculates 402 the value of a variable $Delay_m$ according to the equation:

$$Delay_m = \left( \frac{CW_i}{2 \cdot N_{STA}} \right) \qquad \text{EQN. 2}$$

where $N_{STA}$ denotes the number of active WLAN devices associated with this BSSID. When the resulting value for $Delay_m$ is within 403 a range of values, for example between 4.0 and 7.9, the CW update module 105 sets the $CW_{min}$ value for this BSSID to the value of CWi. When the value of $Delay_m$ is not within the range, the CW update module 105 increments 404 the value of CWi by one, and compares to CWi to a maximum threshold, such as 13 for example. When CWi exceeds the maximum threshold the CW update module 105 sets the $CW_{min}$ value for this BSSID to the value of CWi. When the value of CWi is below the maximum threshold, the CW update module 105 repeats the calculation 402 of $Delay_m$ and until $Delay_m$ is within 403 the range or CWi exceeds the maximum threshold. The flowchart finds the minimum value of $CW_{min}$ such that the calculated $Delay_m$ is within 403 the range defined or CWi exceeds a maximum threshold.

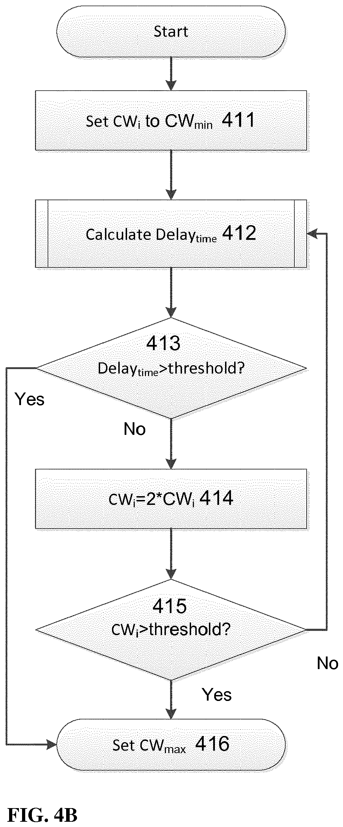

Reference is now made to FIG. 4B, which is a flowchart of a method for calculating a maximum CW value of a WLAN, according to some embodiments of the invention. A temporary variable, denoted by CWi, is initialized 411 to the value $CW_{min}$ by the CW update module 105, and the CW update module 105 then calculates 412 the value of a variable $Delay_{time}$ according to the equation:

$$Delay_{time} = \left( \frac{CW_i}{2 \cdot N_{STA}} \right) \times Slot_{time} \qquad \text{EQN. 3}$$

where $N_{STA}$ denotes the number of active WLAN devices associated with this BSSID. When the resulting value for $Delay_{time}$ is greater 413 than the statistical measure for the interlude time of this BSSID, denoted herein Delay, the CW update module 105 sets the $CW_{max}$ value for this BSSID to the value of CWi. When the value of $Delay_{time}$ is less than or equal to Delay, the CW update module 105 doubles 414 the value of CWi, and compares to CWi to a maximum threshold, such as 8192 for example. If CWi exceeds the maximum threshold the CW update module 105 sets the $CW_{max}$ value for this BSSID to the value of CWi. When the value of CWi is below the maximum threshold, the CW update module 105 repeats the calculation 402 of $Delay_{time}$ and until $Delay_{time}$ is greater 403 than the statistical measure for the interlude delay time calculated by the interlude module 104 for this BSSID, denoted Delay, or CWi exceeds the maximum threshold. The purpose of this flowchart is to find the minimum value of $CW_{max}$ such that the calculated $Delay_{time}$ is greater 403 than Delay or CWi exceeds a maximum threshold.

Reference is now made again to FIG. 2 and FIG. 3. When one or more CW values have been updated 205 they are updated to the WLAN devices 120 using an updated 307 AP beacon frame.

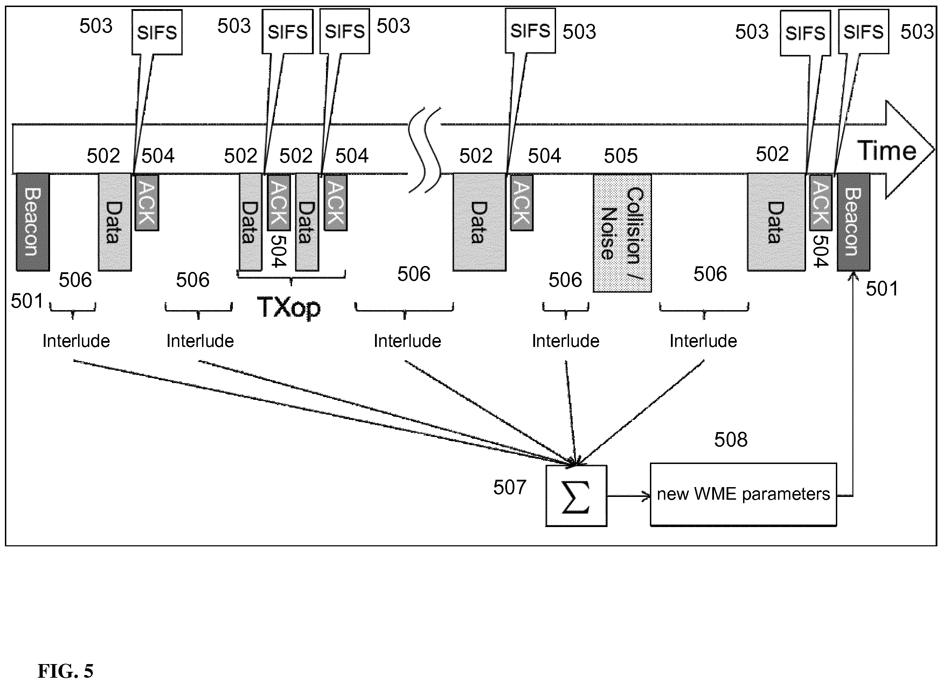

To clarify some embodiments of the invention, following is an example timing diagram of data packets received by the wireless transceiver 112 of an AP apparatus 100 and used to set the CW values by the CW update module 105 of the AP apparatus 100. Reference is now made to FIG. 5, which is a schematic illustration of a WLAN timing diagram showing interlude timing, according to some embodiments of the invention. The timing diagram illustrates the timeline of wireless transmissions from an AP apparatus 100 and WLAN devices 120. The AP apparatus 100 transmits a beacon frame 501 at beacon intervals, each beacon frame 501 comprising CW parameters, such as a CW value, a $CW_{min}$ value, a $CW_{max}$ value, AIFS parameters, and the like. Between the beacon intervals, one or more WLAN devices transmit data 502, and after a short interframe space 503 the AP apparatus 100 sends an acknowledgement (ACK) 504 for each data frame. Between the beacon frame 501 and first data frame 502 or between the ACK 504 and the following data frame 502, there are interludes 506 where the medium of the wireless network is idle. When two or more WLAN devices try to transmit a data frame at the same time, a collision 505 between the transmissions occurs and each WLAN device calculates a backoff counter value. The backoff counter value is the number of time slots each WLAN device waits before attempting to retransmit their data frame. The backoff counter value for each access category is calculated by each device based on the CW values, such as $CW_{min}$, $CW_{max}$, AIFS values, and the like, sent during the most recent beacon frame 501. During the time between one beacon frame 501 and the next, the AP apparatus 100 identifies the interlude 506 timings and uses a statistical measure 507 calculated from the timings to update the WME parameters 508 to be transmitted to the associated WLAN devices in the next beacon frame 501.

Optionally, OBSS controlled AP apparatuses 151 share WME parameters so each AP apparatus 100 can calculate the number of active devices for the other AP apparatuses 150. As used herein, the term controlled AP apparatus means an AP apparatus that has shared their WME parameters with the other AP apparatuses. As used herein, the term uncontrolled AP apparatus means an AP apparatus that has not shared their WME parameters with the other AP apparatuses. For example, an AP apparatus 100 estimates the number of WLAN devices on each OBSS AP apparatus 150 be calculating a statistical measure for interlude timings each AP apparatus and calculating the number of devices associated with that AP apparatus according to the WME parameters received from that AP apparatus and EQN. 1. In this example, an AP apparatus 100 calculates the average interlude time of all uncontrolled AP apparatuses combined. The WME parameters are calculated by the central processor 140 from the number of active devices on each controlled AP apparatus 151 and the average interlude time of all uncontrolled APs 152, and are sent to the associated WLAN devices during the next beacon frame 501.

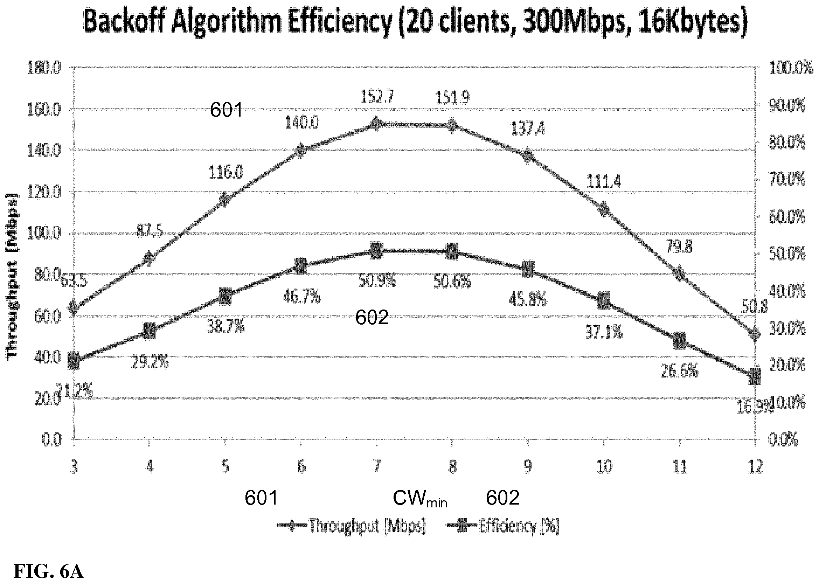

Following are illustrations of the dependence of WLAN performance on the CW values. Reference is now made to FIG. 6A, which is a graph of throughput versus CW minimum values for 20 client WLAN devices, according to some embodiments of the invention. The graph depicts the throughput rate 601 and throughput efficiency 602 as a function of the $CW_{min}$ value in a BSS with 20 WLAN devices, showing an optimum throughput using a $CW_{min}$ value of 7. This may be compared to the typical value of 15 for $CW_{min}$, as used, for example, by IEEE standards 802.11a and 802.11n.

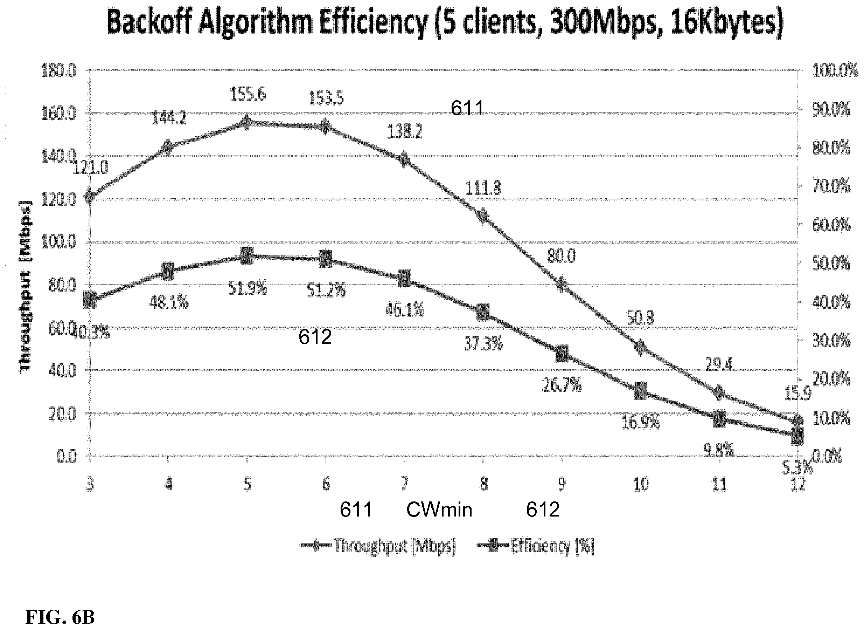

Reference is now made to FIG. 6B, which is a graph of throughput versus CW minimum values for five client WLAN devices, according to some embodiments of the invention. The graph depicts the throughput rate 611 and throughput efficiency 612 as a function of the $CW_{min}$ value in a BSS with five WLAN devices, showing an optimum throughput using a $CW_{min}$ value of 5.

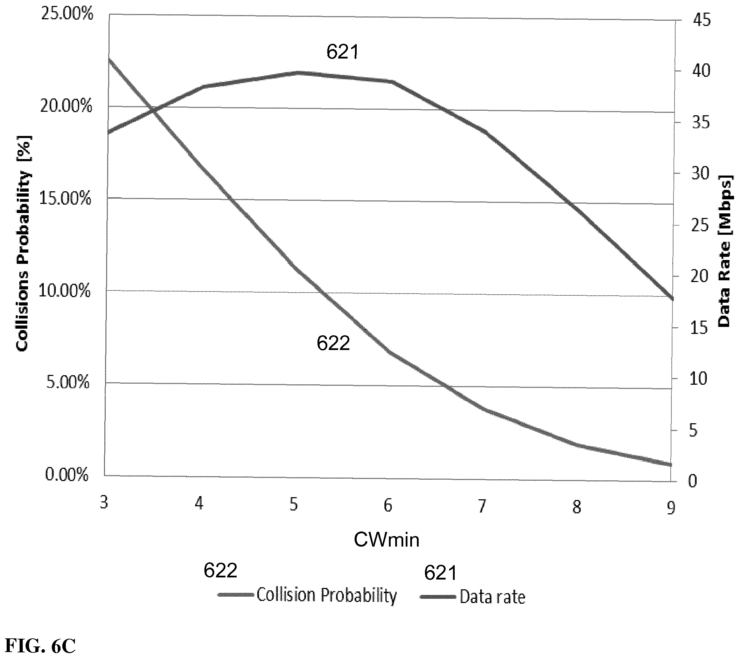

Reference is now made to FIG. 6C, which is a graph of collision probability and data rate versus CW minimum values for six client WLAN devices, according to some embodiments of the invention. The graph depicts the data rate 621 and collision probability 622 as a function of the $CW_{min}$ value in a BSS with six WLAN devices, showing a collision rate of new 10% when the data rate is optimal at a $CW_{min}$ value of 5.

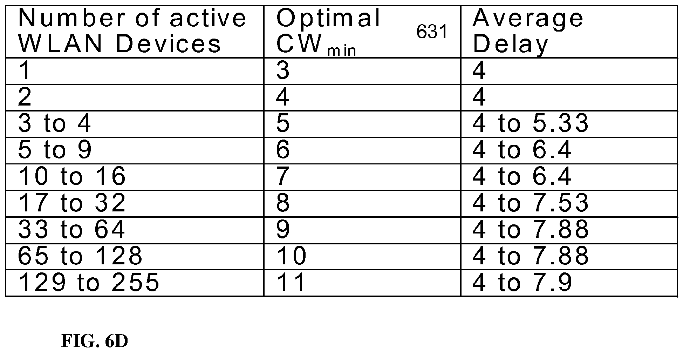

Reference is now made to FIG. 6D, which is a data table of the CW minimum values according to the number of client WLAN devices, according to some embodiments of the invention. The optimal $CW_{min}$ values 631 depend on the number of active WLAN devices and the values range from 3 to 11. This may be compared to the typical value of 15 for $CW_{min}$, as used, for example, by IEEE standards 802.11a and 802.11n.

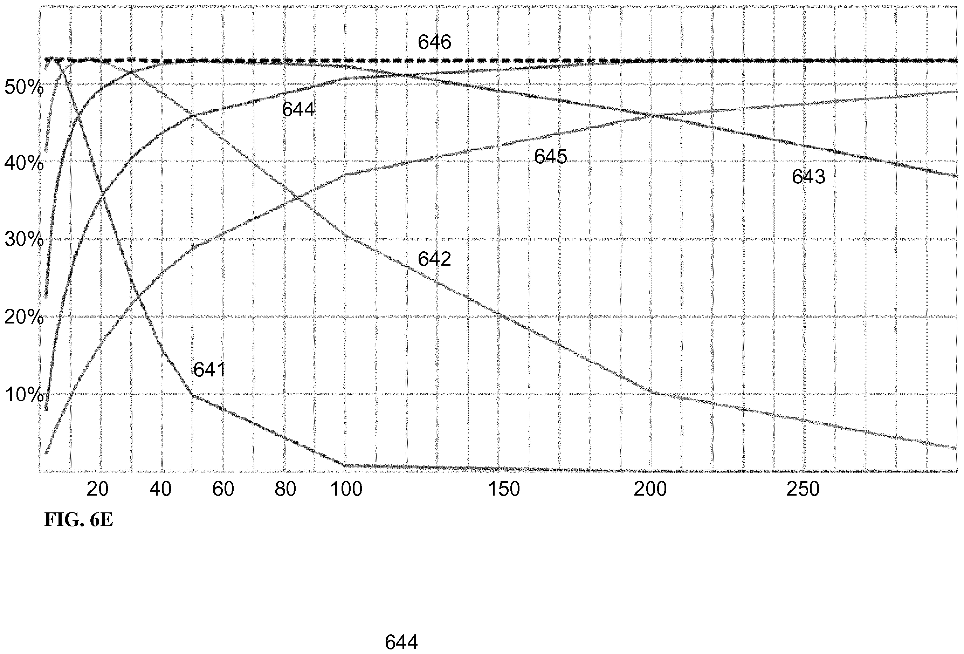

Reference is now made to FIG. 6E, which is a graph of throughput efficiency versus the number of active WLAN devices at different CW minimum values, according to some embodiments of the invention. Throughput efficiency is the actual throughput data rate divided by the maximal throughput data rate of the physical medium. The throughput efficiency versus number of devices is shown for a $CW_{min}$ value of 4 as at 641, 6 as at 642, 8 as at 643, 10 as at 644, and 12 as at 645. At each $CW_{min}$ value, the maximum throughput efficiency is at an increasing greater number of devices, but the maximum throughput efficiency 646 is substantially constant. Thus, for a fixed $CW_{min}$ value the number of devices strongly determines the throughput efficiency, and when a high number of WLAN devices are competing for the medium the throughput efficiency may be much a small fraction of the optimal value. For example, in an apartment building with 20 OBSSs, five WLAN devices per OBSS, and two of these WLAN devices making a VOIP phone call, 40 devices may be competing for that access category. The data throughput efficiency in this example may be as low as 20 of the optimal at CWmin value of 3, such as is used for the IEEE 802.1 In standard and the QoS may be insufficient for VOIP calls. When the AP apparatus 100 varies the $CW_{min}$ value according to the number of active devices the throughput efficiency may be optimal and the QoS may be sufficient for VOIP calls.

Following are benefits of some embodiments of the invention. An AP apparatus 100 may update the CW values between beacon frames 501 according to the number of WLAN devices 120 actively transmitting data frames, resulting in a higher throughput of the wireless network relative to fixed values of CW parameters. An AP apparatus 100 may update the CW values according to traffic on the same frequency channel from uncontrolled AP apparatuses 152, thereby improving the quality of service parameters of the controlled AP apparatus' WLAN devices 120. For example, using embodiments of the invention a controlled BSS throughput may be increased by 300% over the IEEE standard. For example, using embodiments of the invention a controlled BSS AP apparatus 100 may have up to 4 times the number of WLAN devices associated with the AP apparatus 100 and a 100% increase in maximum data rates. For example, using embodiments of the invention an OBSS AP apparatus 100 may have up to 6 times the number of WLAN devices associated with the AP apparatus 100. For example, using embodiments of the invention an OBSS AP apparatus 100 may have an increase in throughput of 100% relative to the IEEE standard. For example, using embodiments of the invention an OBSS AP apparatus 100 may have an improvement in quality of service performance of 300% relative to the IEEE standard. For example, using embodiments of the invention an AP apparatus 100 sharing a frequency channel with uncontrolled AP apparatuses 152 may have contention priority over the uncontrolled AP apparatuses 152 and reduced interference from the uncontrolled AP apparatuses 152. For example, using embodiments of the invention an AP apparatus 100 sharing a frequency channel with uncontrolled AP apparatuses 152 may have an increase of 500% in data rate throughput. For example, using embodiments of the invention an AP apparatus 100 sharing a frequency channel with uncontrolled AP apparatuses 152 may have less saturation of the OBSS.

The methods as described above may be used in the fabrication of integrated circuit chips.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant IEEE 802.11 standards will be developed and the scope of the term IEEE standard is intended to include all such new technologies a priori.

It is expected that during the life of a patent maturing from this application many relevant wireless local area networks (WLANs) will be developed and the scope of the term wireless local area network is intended to include all such new technologies a priori.

It is expected that during the life of a patent maturing from this application many relevant access point apparatuses will be developed and the scope of the term access point apparatus is intended to include all such new technologies a priori.

It is expected that during the life of a patent maturing from this application many relevant WLAN devices will be developed and the scope of the term WLAN device is intended to include all such new technologies a priori.

As used herein the term "about" refers to $\pm$ 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims.

In addition, citation or identification of any reference in this application shall not be construed as an admission that such reference is available as prior art to the present invention. To the extent that section headings are used, they should not be construed as necessarily limiting.

**Claims**

1. An apparatus (100) adapted to update a contention window, CW, comprising:

   a wireless local area network, WLAN, transceiver (112) adapted to receive, during a monitoring period, a plurality of transmissions from a plurality of WLAN devices (120);
   a processor (102) adapted to:

   identify transmission timing of a plurality of data frames encoded in at least some of said plurality of transmissions during said monitoring period;
   identify interlude timing of a plurality of transmission interludes between said plurality of data frames;
   calculate a statistical measure of length of said plurality of transmission interludes;
   update a CW value of said plurality of WLAN devices (120) according to said statistical measure; wherein the plurality of transmissions are identified by the processor being adapted to:

   extract quality of service, QoS, parameters of each one of said plurality of WLAN devices (120) from said plurality of transmissions,
   classify said plurality of transmissions as originated from a controlled access point (151) or an uncontrolled access point (152) according to said QoS parameters, and
   identify said at least some transmissions according to said classification.

2. The apparatus of any of the previous claims, wherein said statistical measure is an average.

3. The apparatus (100) of any of the previous claims, wherein said processor (102) is adapted to estimate a number of active WLAN devices (120) among said plurality of WLAN devices (120) by calculating a ratio between a product of said CW value and said interlude timing quantized in a slot time and said statistic measure.

4. The apparatus (100) of any of the previous claims, wherein said processor (102) is adapted to calculate another statistical measure estimating a number of inactive WLAN devices (120) among said plurality of WLAN devices (120) according to said statistical measure, and perform said update according to said another statistical measure.

5. The apparatus (100) of any of the previous claims, wherein said processor (102) is adapted to calculate Short Interframe Space, SIFS, delays in said plurality of transmissions and to identify interlude timing while removing said SIPS delays from said plurality of transmission interludes.

6. The apparatus (100) of any of the previous claims, wherein said update optimizes downlink and uplink parameters of said apparatus (100).

7. The apparatus (100) of any of the previous claims, wherein said processor (102) is further adapted to
   use said updated CW value when transmitting or receiving data using said WLAN transceiver, and
   repeat said identify transmission timing, said identify interlude timing of a plurality, said calculate and said update for further updating said updated CW value.

8. The apparatus (100) of any of the previous claims, wherein said transmission timing and said interlude timing is measured in slot time.

9. The apparatus (100) of claim 7, wherein said processor (102) is adapted to perform said repeat when said statistical measure is at least one of above a minimum delay threshold and below a maximum delay threshold.

10. The apparatus (100) of claim 7, wherein said processor (102) is adapted to perform said update by incrementing, duplicating, and raising to power CW value.

11. A system comprising a plurality of apparatuses, each defined as recited in claim 1, wherein said system comprises a central processor (140) adapted to receive a plurality of statistical measures each from another of said plurality of apparatuses (150) and to calculate accordingly at least one Wireless Multimedia Extension, WME, parameter for at least one of downlink and uplink management.

12. The apparatus (100) of any of the previous claims 1-10, wherein said processor (102) is adapted to extract quality of service, QoS, parameters of each one of said plurality of WLAN devices (120) from said plurality of transmissions, wherein said QoS parameters are selected from a group consisting of Arbitration inter-frame spacing, AIFS, Exponent Minimum Contention Window, ECWmin, and Exponent Maximum Contention Window, ECWmax.

13. The apparatus (100) of claim 1, wherein said plurality of transmission interludes are identified by analyzing whether transmission reception energy level of said plurality of transmissions is above a clear channel assessment, CCA, threshold.

14. A method of updating a contention window, CW, comprising:

   receiving, during a monitoring period, a plurality of transmissions from a plurality of WLAN devices (120);
   identifying transmission timing of a plurality of data frames encoded in at least some of said plurality of transmissions during said monitoring period;
   identifying interlude timing of a plurality of transmission interludes between said plurality of data frames;
   calculating a statistical measure of length of said plurality of transmission interludes; and
   updating a CW value of said plurality of WLAN devices (120) according to said statistical measure wherein the plurality of transmissions are identified by:

      extracting quality of service, QoS, parameters of each one of said plurality of WLAN devices (120) from said plurality of transmissions,
      classifying said plurality of transmissions as originated from a controlled access point (151) or an uncontrolled access point (152) according to said QoS parameters, and
      identifying said at least some transmissions according to said classification.

15. A computer program comprising a readable storage medium storing program code thereon for updating a contention window, CW, the program code comprising:

   instructions for identifying transmission timing of a plurality of data frames encoded in at least some of a plurality of transmissions received from a plurality of WLAN devices (120) during a monitoring period;
   instructions for identifying interlude timing of a plurality of transmission interludes between said plurality of data frames;
   instructions for calculating a statistical measure of length of said plurality of transmission interludes; and
   instructions for updating a CW value of said plurality of WLAN devices (120) according to said statistical measure;
   wherein instructions are included for identifying the plurality of transmissions using:

      instructions for extracting quality of service, QoS, parameters of each one of said plurality of WLAN devices (120) from said plurality of transmissions,
      instructions for classifying said plurality of transmissions as originated from a controlled access point (151) or an uncontrolled access point (152) according to said QoS parameters, and
      instructions for identifying said at least some transmissions according to said classification.

**Patentansprüche**

1. Vorrichtung (100), die zum Aktualisieren eines Wettbewerbsfensters (Contention Window, CW) vorgesehen ist, umfassend:

   einen drahtlosen lokalen Netzwerk (WLAN)-Transceiver (112), der dazu vorgesehen ist, während eines Überwachungszeitraums eine Vielzahl von Übertragungen von einer Vielzahl von WLAN-Geräten (120) zu empfangen;
   einen Prozessor (102), der dazu vorgesehen ist:

      die Übertragungszeit einer Vielzahl von Datenrahmen, die in mindestens einigen der Vielzahl von Übertragungen während des Überwachungszeitraums kodiert sind, zu identifizieren;
      die Unterbrechungszeit einer Vielzahl von Übertragungsunterbrechungen zwischen der Vielzahl von Datenrahmen zu identifizieren;
      eine statistische Messgröße der Länge der Vielzahl von Übertragungsunterbrechungen zu berechnen;
      einen CW-Wert der Vielzahl von WLAN-Geräten (120) gemäß der statistischen Messgröße zu aktualisieren;

wobei die Vielzahl von Übertragungen durch den Prozessor identifiziert werden, der dazu vorgesehen ist:

die Dienstgüte (Quality of Service, QoS)-Parameter von jedem der Vielzahl von WLAN-Geräten (120) aus der Vielzahl von Übertragungen zu extrahieren,
die Vielzahl von Übertragungen hinsichtlich ihres Ursprungs von einem gesteuerten Zugangspunkt (151) oder einem ungesteuerten Zugangspunkt (152) gemäß den QoS-Parametern zu klassifizieren, und
die mindestens einigen Übertragungen gemäß der Klassifizierung zu identifizieren.

2. Vorrichtung nach einem der vorhergehenden Ansprüche, wobei die statistische Messgröße ein Mittelwert ist.

3. Vorrichtung (100) nach einem der vorhergehenden Ansprüche, wobei der Prozessor (102) dazu vorgesehen ist, eine Anzahl von aktiven WLAN-Geräten (120) unter der Vielzahl von WLAN-Geräten (120) durch Berechnen eines Verhältnisses zwischen einem Produkt des CW-Werts und der Unterbrechungszeit, die als ein Zeitfenster und statistische Messgröße quantisiert wird, zu schätzen.

4. Vorrichtung (100) nach einem der vorhergehenden Ansprüche, wobei der Prozessor (102) dazu vorgesehen ist, eine andere statistische Messgröße zu berechnen, die eine Anzahl inaktiver WLAN-Geräte (120) unter der Vielzahl von WLAN-Geräten (120) gemäß der statistischen Messgröße schätzt, und die Aktualisierung gemäß der anderen statistischen Messgröße durchzuführen.

5. Vorrichtung (100) nach einem der vorhergehenden Ansprüche, wobei der Prozessor (102) dazu vorgesehen ist, Verzögerungen der kurzen Lücke zwischen Rahmen (Short Interframe Space, SIFS) in der Vielzahl von Übertragungen zu berechnen und die Unterbrechungszeit zu identifizieren, während die SIFS-Verzögerungen aus der Vielzahl von Übertragungsunterbrechungen entfernt werden.

6. Vorrichtung (100) nach einem der vorhergehenden Ansprüche, wobei die Aktualisierung die Downlink- und Uplink-Parameter der Vorrichtung (100) optimiert.

7. Vorrichtung (100) nach einem der vorhergehenden Ansprüche, wobei der Prozessor (102) ferner dazu vorgesehen ist,
den aktualisierten CW-Wert zu verwenden, wenn Daten unter Verwendung des WLAN-Transceivers übertragen oder empfangen werden, und
das Identifizieren der Übertragungszeit, das Identifizieren der Unterbrechungszeit der Vielzahl, das Berechnen und die Aktualisierung zu wiederholen, um den aktualisierten CW-Wert weiter zu aktualisieren.

8. Vorrichtung (100) nach einem der vorhergehenden Ansprüche, wobei die Übertragungszeit und die Unterbrechungszeit als Zeitfenster gemessen werden.

9. Vorrichtung (100) nach Anspruch 7, wobei der Prozessor (102) die Wiederholung durchführen kann, wenn die statistische Messgröße mindestens über einem minimalen Verzögerungsschwellenwert und unter einem maximalen Verzögerungsschwellenwert liegt.

10. Vorrichtung (100) nach Anspruch 7, wobei der Prozessor (102) dazu vorgesehen ist, die Aktualisierung durch Inkrementieren, Duplizieren und Potenzieren des CW-Werts durchzuführen.

11. System, umfassend eine Vielzahl von Vorrichtungen, von denen jede wie in Anspruch 1 definiert ist, wobei das System einen zentralen Prozessor (140) umfasst, der dazu vorgesehen ist, eine Vielzahl von statistischen Messgrößen jeweils von einer anderen der Vielzahl von Vorrichtungen (150) zu empfangen und dementsprechend mindestens einen Parameter für die drahtlose Multimedia-Erweiterung (Wireless Multimedia Extension, WME) für mindestens eine von der Downlink- und Uplink-Verwaltung zu berechnen.

12. Vorrichtung (100) nach einem der vorhergehenden Ansprüche 1 bis 10, wobei der Prozessor (102) vorgesehen ist, Parameter für die Dienstgüte (QoS) von jedem der Vielzahl von WLAN-Geräten (120) aus der Vielzahl von Übertragungen zu extrahieren, wobei die QoS-Parameter aus einer Gruppe ausgewählt werden, die aus einem Vermittlungs-Zwischenrahmenabstand (Arbitration Inter-Frame Spacing, AIFS), minimalen Exponenten-Wettbewerbsfenster (Minimum Contention Window, ECWmin) und maximalen Exponenten-Wettbewerbsfenster (Maximum Contention Window, ECWmax) besteht.

**13.** Vorrichtung (100) nach Anspruch 1, wobei die Vielzahl von Übertragungsunterbrechungen durch das Analysieren identifiziert wird, ob der Übertragungs- und Empfangsenergiepegel der Vielzahl von Übertragungen über einem Schwellenwert für eine Bewertung eines freien Kanals (Clear Channel Assessment, CCA) liegt.

**14.** Verfahren zur Aktualisierung eines Wettbewerbsfensters (CW), umfassend:

Empfangen, während eines Überwachungszeitraums, einer Vielzahl von Übertragungen von einer Vielzahl von WLAN-Geräten (120);
Identifizieren der Übertragungszeit einer Vielzahl von Datenrahmen, die in mindestens einigen der Vielzahl von Übertragungen während des Überwachungszeitraum kodiert sind;
Identifizieren der Unterbrechungszeit einer Vielzahl von Übertragungsunterbrechungen zwischen der Vielzahl von Datenrahmen;
Berechnen einer statistische Messgröße der Länge der Vielzahl von Übertragungsunterbrechungen; und
Aktualisieren eines CW-Wert der Vielzahl von WLAN-Geräten (120) gemäß der statistischen Messgröße, wobei die Vielzahl von Übertragungen identifiziert werden durch:

Extrahieren der Dienstgüte (QoS)-Parameter von jedem der Vielzahl von WLAN-Geräten (120) aus der Vielzahl von Übertragungen,
Klassifizieren der Vielzahl von Übertragungen hinsichtlich ihres Ursprungs von einem gesteuerten Zugangspunkt (151) oder einem ungesteuerten Zugangspunkt (152) gemäß den QoS-Parametern, und
Identifizieren der mindestens einigen Übertragungen gemäß der Klassifizierung.

**15.** Computerprogramm, umfassend ein lesbares Speichermedium, auf dem Programmcode zum Aktualisieren eines Wettbewerbsfensters (CW) gespeichert ist, der Programmcode umfassend:

Anweisungen zum Identifizieren der Übertragungszeit einer Vielzahl von Datenrahmen, die in mindestens einigen einer Vielzahl von Übertragungen kodiert sind, die von einer Vielzahl von WLAN-Geräten (120) während eines Überwachungszeitraums empfangen werden;
Anweisungen zum Identifizieren der Unterbrechungszeit einer Vielzahl von Übertragungsunterbrechungen zwischen der Vielzahl von Datenrahmen;
Anweisungen zum Berechnen einer statistische Messgröße der Länge der Vielzahl von Übertragungsunterbrechungen; und
Anweisungen zum Aktualisieren eines CW-Werts der Vielzahl von WLAN-Geräten (120) gemäß der statistischen Messgröße;
wobei Anweisungen enthalten sind, um die Vielzahl von Übertragungen unter Verwendung von Folgendem zu identifizieren:

Anweisungen zum Extrahieren der Dienstgüte (QoS)-Parameter von jedem der Vielzahl von WLAN-Geräten (120) aus der Vielzahl von Übertragungen,
Anweisungen zum Klassifizieren der Vielzahl von Übertragungen hinsichtlich ihres Ursprungs von einem gesteuerten Zugangspunkt (151) oder einem ungesteuerten Zugangspunkt (152) gemäß den QoS-Parametern, und
Anweisungen zum Identifizieren der mindestens einigen Übertragungen gemäß der Klassifizierung.

**Revendications**

**1.** Appareil (100) adapté pour mettre à jour une fenêtre de contention, CW, comprenant :

un transmetteur-récepteur de réseau local sans fil, WLAN, (112) adapté pour recevoir, durant une période de surveillance, une pluralité de transmissions à partir d'une pluralité de dispositifs WLAN (120) ;
un processeur (102) adapté pour :

identifier une synchronisation de transmission d'une pluralité de trames de données encodées dans au moins certaines de ladite pluralité de transmissions durant ladite période de surveillance ;
identifier une synchronisation d'interlude d'une pluralité d'interludes de transmission entre ladite pluralité de trames de données ;
calculer une mesure statistique de longueur de ladite pluralité d'interludes de transmission ;

mettre à jour une valeur de CW de ladite pluralité de dispositifs WLAN (120) selon ladite mesure statistique ; dans lequel la pluralité de transmissions sont identifiées par le processeur, étant adapté pour :

extraire des paramètres de qualité de service, QoS, de chacun de ladite pluralité de dispositifs WLAN (120) à partir de ladite pluralité de transmissions,
classifier ladite pluralité de transmissions comme étant provenues d'un point d'accès contrôlé (151) ou d'un point d'accès non contrôlé (152) selon lesdits paramètres de QoS, et
identifier lesdites au moins certaines transmissions selon ladite classification.

2. Appareil selon l'une quelconque des revendications précédentes, dans lequel ladite mesure statistique est une moyenne.

3. Appareil (100) selon l'une quelconque des revendications précédentes, dans lequel ledit processeur (102) est adapté pour estimer un nombre de dispositifs WLAN actifs (120) parmi ladite pluralité de dispositifs WLAN (120) en calculant un rapport entre un produit de ladite valeur de CW et de ladite synchronisation d'interlude quantifiée en un créneau temporel et ladite mesure statistique.

4. Appareil (100) selon l'une quelconque des revendications précédentes, dans lequel ledit processeur (102) est adapté pour calculer une autre mesure statistique estimant un nombre de dispositifs WLAN inactifs (120) parmi ladite pluralité de dispositifs WLAN (120) selon ladite mesure statistique, et réaliser ladite mise à jour selon ladite une autre mesure statistique.

5. Appareil (100) selon l'une quelconque des revendications précédentes, dans lequel ledit processeur (102) est adapté pour calculer des retards d'espace inter-trame court, SIFS, dans ladite pluralité de transmissions et pour identifier une synchronisation d'interlude tout en éliminant lesdits retards de SIFS à partir de ladite pluralité d'interludes de transmission.

6. Appareil (100) selon l'une quelconque des revendications précédentes, dans lequel ladite mise à jour optimise des paramètres de liaison descendante et de liaison montante dudit appareil (100).

7. Appareil (100) selon l'une quelconque des revendications précédentes, dans lequel ledit processeur (102) est en outre adapté pour
utiliser ladite valeur de CW mise à jour lors de la transmission ou de la réception de données en utilisant ledit transmetteur-récepteur de WLAN, et
répéter ladite identification d'une synchronisation de transmission, ladite identification d'une synchronisation d'interlude d'une pluralité, ledit calcul et ladite mise à jour pour en outre mettre à jour ladite valeur de CW mise à jour.

8. Appareil (100) selon l'une quelconque des revendications précédentes, dans lequel ladite synchronisation de transmission et ladite synchronisation d'interlude sont mesurées en créneau temporel.

9. Appareil (100) de la revendication 7, dans lequel ledit processeur (102) est adapté pour réaliser ladite répétition lorsque ladite mesure statistique est au moins une de : supérieure à un seuil de retard minimum et inférieure à un seuil de retard maximum.

10. Appareil (100) de la revendication 7, dans lequel ledit processeur (102) est adapté pour réaliser ladite mise à jour en incrémentant, dupliquant, et élevant à la puissance la valeur de CW.

11. Système comprenant une pluralité d'appareils, chacun défini selon la revendication 1, dans lequel ledit système comprend un processeur central (140) adapté pour recevoir une pluralité de mesures statistiques, chacune provenant d'un autre de ladite pluralité d'appareils (150), et pour calculer par conséquent au moins un paramètre d'extension multimédia sans fil, WME, pour la gestion d'au moins une de : liaison descendante et liaison montante.

12. Appareil (100) selon l'une quelconque des revendications précédentes 1 à 10, dans lequel ledit processeur (102) est adapté pour extraire des paramètres de qualité de service, QoS, de chacun de ladite pluralité de dispositifs WLAN (120) à partir de ladite pluralité de transmissions, dans lequel lesdits paramètres de QoS sont sélectionnés à partir d'un groupe constitué de : espacement inter-trame d'arbitrage, AIFS, fenêtre de contention minimum d'exposant, ECWmin, et fenêtre de contention maximum d'exposant, ECWmax.

**13.** Appareil (100) de la revendication 1, dans lequel ladite pluralité d'interludes de transmission sont identifiés en analysant le fait qu'un niveau d'énergie de réception de transmission de ladite pluralité de transmissions est ou non supérieur à un seuil d'évaluation de canal libre, CCA.

**14.** Procédé de mise à jour d'une fenêtre de contention, CW, comprenant :

la réception, durant une période de surveillance, d'une pluralité de transmissions à partir d'une pluralité de dispositifs WLAN (120) ;
l'identification d'une synchronisation de transmission d'une pluralité de trames de données encodées dans au moins certaines de ladite pluralité de transmissions durant ladite période de surveillance ;
l'identification d'une synchronisation d'interlude d'une pluralité d'interludes de transmission entre ladite pluralité de trames de données ;
le calcul d'une mesure statistique de longueur de ladite pluralité d'interludes de transmission ; et
la mise à jour d'une valeur de CW de ladite pluralité de dispositifs WLAN (120) selon ladite mesure statistique, dans lequel la pluralité de transmissions sont identifiées par :

l'extraction de paramètres de qualité de service, QoS, de chacun de ladite pluralité de dispositifs WLAN (120) à partir de ladite pluralité de transmissions,
la classification de ladite pluralité de transmissions comme étant provenues d'un point d'accès contrôlé (151) ou d'un point d'accès non contrôlé (152) selon lesdits paramètres de QoS, et
l'identification desdites au moins certaines transmissions selon ladite classification.

**15.** Programme d'ordinateur comprenant un support de stockage lisible stockant un code de programme sur celui-ci pour mettre à jour une fenêtre de contention, CW, le code de programme comprenant :

des instructions pour identifier une synchronisation de transmission d'une pluralité de trames de données encodées dans au moins certaines d'une pluralité de transmissions reçues à partir d'une pluralité de dispositifs WLAN (120) durant une période de surveillance ;
des instructions pour identifier une synchronisation d'interlude d'une pluralité d'interludes de transmission entre ladite pluralité de trames de données ;
des instructions pour calculer une mesure statistique de longueur de ladite pluralité d'interludes de transmission ; et
des instructions pour mettre à jour une valeur de CW de ladite pluralité de dispositifs WLAN (120) selon ladite mesure statistique ;
dans lequel des instructions sont incluses pour identifier la pluralité de transmissions en utilisant :

des instructions pour extraire des paramètres de qualité de service, QoS, de chacun de ladite pluralité de dispositifs WLAN (120) à partir de ladite pluralité de transmissions, des instructions pour classifier ladite pluralité de transmissions comme étant provenues d'un point d'accès contrôlé (151) ou d'un point d'accès non contrôlé (152) selon lesdits paramètres de QoS, et
des instructions pour identifier lesdites au moins certaines transmissions selon ladite classification.

**FIG. 1A**

**FIG. 1B**

```
                                    ┌──────────────────────┐
                                    │       Receive        │
  ╭─────────────╮                   │  Transmissions 201   │
  │    Start    │──────────────────▶│                      │
  ╰─────────────╯                   └──────────┬───────────┘
                                               │
                                               ▼
                                    ┌──────────────────────┐
                                    │  Identify Data Frame  │
                                    │     Timings 202       │
                                    │                       │
                                    └──────────┬────────────┘
                                               │
                                               ▼
                                    ┌──────────────────────┐
                                    │   Identify Interlude  │
                                    │     Timings 203       │
                                    │                       │
                                    └──────────┬────────────┘
                                               │
                                               ▼
                                    ┌──────────────────────┐
                                    │ Calculate Statistical │
                                    │    Measure   204      │
                                    │                       │
                                    └──────────┬────────────┘
                                               │
                                               ▼
                          ┌──────────────────────┐      ╭─────────────╮
                          │  Update a Contention  │─────▶│     End     │
                          │  Window Value 205     │      ╰─────────────╯
                          └──────────────────────┘
```

# FIG. 2

**FIG. 3**

**FIG. 4A**

**FIG. 4B**

FIG. 5

EP 3 245 834 B1

Backoff Algorithm Efficiency (20 clients, 300Mbps, 16Kbytes)

FIG. 6A

Backoff Algorithm Efficiency (5 clients, 300Mbps, 16Kbytes)

FIG. 6B

EP 3 245 834 B1

FIG. 6C

| Number of active WLAN Devices | Optimal $CW_{min}$ 631 | Average Delay |
|---|---|---|
| 1 | 3 | 4 |
| 2 | 4 | 4 |
| 3 to 4 | 5 | 4 to 5.33 |
| 5 to 9 | 6 | 4 to 6.4 |
| 10 to 16 | 7 | 4 to 6.4 |
| 17 to 32 | 8 | 4 to 7.53 |
| 33 to 64 | 9 | 4 to 7.88 |
| 65 to 128 | 10 | 4 to 7.88 |
| 129 to 255 | 11 | 4 to 7.9 |

**FIG. 6D**

FIG. 6E

644

**REFERENCES CITED IN THE DESCRIPTION**

**Patent documents cited in the description**

- WO 2006097899 A1